# EUROPÄISCHE PATENTANMELDUNG

(11) **EP 1 491 601 A2**
(43) Veröffentlichungstag der Anmeldung: **29.12.2004**
(21) Anmeldenummer: 04013871.1
(22) Anmeldetag: 14.06.2004
(51) Int. Cl.: C09D 175/04, C08G 18/80, C08G 18/08

(54) **Blockierte Polyisocyanate**

(30) Priorität: 23.06.2003 DE 10328064
(71) Anmelder: Bayer MaterialScience AG, 51368 Leverkusen (DE)
(72) Erfinder: Münzmay, Thomas, Dr., 41539 Dormagen (DE); Mazanek, Jan, Dr, 51061 Köln (DE); Meixner, Jürgen, Dr., 47083 Krefeld (DE); Petzoldt, Joachim, Dr, 40789 Monheim (DE); Müller, Heino, 51375 Leverkusen (DE)

(57) **Zusammenfassung**

Die Erfindung betrifft wässrige Zubereitungen wasserverdünnbarer blockierter Polyisocyanate, deren Herstellung- und Verwendung in ggf. selbstvernetzenden Einkomponenten-Systemen.

## Beschreibung

Die Erfindung betrifft wässrige und/oder wasserverdünnbare blockierte Polyisocyanate, deren Herstellung- und Verwendung in ggf. selbstvernetzenden Einkomponenten-Systemen.

Der Einsatz von Blockierungsmitteln zum temporären Schutz von Isocyanatgruppen ist seit langem bekannt. Blockierte Polyisocyanate werden zur Herstellung von bei Raumtemperatur lagerstabilen, in der Hitze härtbaren 1K-PUR-Einbrennsystemen eingesetzt. Die blockierten Polyisocyanate werden dabei z.B. mit Hydroxylgruppen enthaltenden Polyestern, Polyacrylaten, anderen Polymeren sowie weiteren Bestandteilen von Lacken und Farben wie Pigmenten, Colösern oder Additiven vermischt. Eine andere Möglichkeit, bei Raumtemperatur lagerstabile Einbrennlacke zu erhalten, ist die teilweise Blockierung der Isocyanatgruppen von Polymeren, die sowohl blockierte Isocyanate als auch Hydroxylgruppen enthalten.

Die wichtigsten Verbindungen, die zur Blockierung von Polyisocyanaten eingesetzt werden sind ε-Caprolactam, Methylethylketoxim, Malonsäureester, sekundäre Amine, gegebenenfalls substituierte Phenole sowie Triazol- und Pyrazolderivate, so wie sie z.B. in den EP-A 0 576 952, EP-A 0 566 953, EP-A 0 159 117, US-A 4 482 721, WO 97/12924 oder EP-A 0 744 423 beschrieben sind.

Auch die Verwendung von aromatischen Hydroxylgruppen enthaltenden Carbonsäurederivaten ist an sich bekannt. So beschreibt US-A 6 288 199 den Einsatz von Polyisocyanaten, die mindestens teilweise mit Gemischen aus aromatischen Hydroxylverbindungen und Hydroxybenzoesäureestern blockiert sind.

In der EP-A 0 539 802 wird der Einsatz von Vernetzern aus Polyisocyanaten und 4-Hydroxybenzoesäureethylester bei der Herstellung von Klebstoffrohstoffen beschrieben. Es sind dies nichtwässrige Dispersionen zur Herstellung von frei fließenden thermoplastischen, pulverigen Polyurethanen, die ebenfalls Umsetzungsprodukte von Polyisocyanaten mit 4-Hydroxybenzoesäureethylester als Vernetzer enthalten.

Die Verwendung von mit 4-Hydroxybenzoesäureestern blockiertem Isophorondiisocyanat für Pulverlacke ist in der JP-A 550 031 415 beschrieben, ebenso wie der Einsatz von 4-Hydroxybenzoat (JP-A 04 144 787) als Blockierungsmittel für Polyisocyanate zur Herstellung von wärmeaktivierbaren Aufnahmematerialien.

Die Verwendung von Hydroxybenzoesäureestern als Blockierungsmittel für wässrige Systeme ist bisher nicht bekannt. Alle in den oben genannten Patentschriften aufgeführten Blockierungsmittel weisen spezifische Nachteile auf. Einerseits werden Blockierungsmittel beansprucht, die aufgrund ihrer hohen Aktivierungstemperatur nicht in allen Prozessen einsetzbar sind. Andererseits werden Blockierungsmittel mit sehr niedriger Abspalttemperatur benannt, wie z.B. die Malonsäuredialkylester, die aber aufgrund ihrer hohen Reaktivität nur eine begrenzte Lagerstabilität in Wasser aufweisen. Die bezüglich Lagerstabilität in wässriger Zubereitung und Reaktivität optimalen Blockierungsmittel Butanonoxim und Diisopropylamin erfordern aufgrund ihrer Einstufung als Gefahrstoffe erhöhten Aufwand für die Arbeitshygiene, was zwangsläufig zu erhöhten Kosten für den Endanwender dieser Produkte führt.

Es bestand von daher der dringende Bedarf nach Produkten, welche die oben genannten Nachteile und Probleme bekannter Systeme vermeiden.

Aufgabe der vorliegenden Erfindung bestand deshalb darin, in Wasser stabile Dispersionen blockierter Polyisocyanate zu finden, die beim Einsatz in Lacken, Farben und anderen Beschichtungsmitteln hohe Umweltverträglichkeit aufweisen.

Die Aufgabe wurde mit den erfindungsgemäßen Zubereitungen blockierter Polyisocyanate und mit diese enthaltenden selbstvernetzenden Einkomponenten-Einbrennsystemen gelöst.

Gegenstand der vorliegenden Erfindung sind wässrige Zubereitungen blockierter Polyisocyanate der Formel (I) 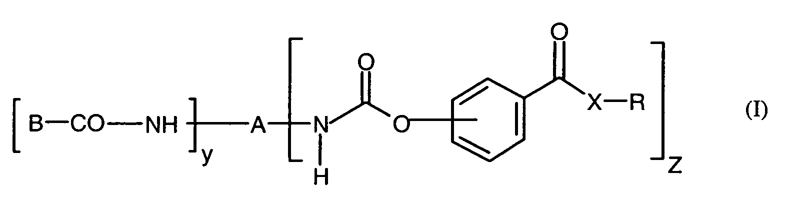 worin
- A: den Rest eines Polyisocyanats bedeutet
- B: den Rest eines kationischen, anionischen und/oder nichtionischen Hydrophilierungsmittels bedeutet,
- X: Sauerstoff, NH oder NR bedeutet,
- R: Wasserstoff, C₁- bis C₈-Alkyl oder Cycloalkyl bedeutet
- Z: für die Zahl 1 bis 8, bevorzugt 2 bis 6, besonders bevorzugt 2,5 bis 4,0 steht und
- y: eine Zahl von 0,1 bis 4,0, bevorzugt 0,2 bis 2,0 bedeutet, wobei das Äquivalent-Verhältnis von z zu y 20:1 bis 1:1, bevorzugt 10:1 bis 2:1, besonders bevorzugt 8:1 bis 4:1, beträgt
sowie auf diesen basierende selbstvernetzende 1K-Einbrennsysteme.

Die in den erfindungsgemäßen Zubereitungen eingesetzten blockierten Polyisocyanate der allgemeinen Formel (I) können durch Umsetzung von Polyisocyanaten mit Hydroxycarbonsäuren oder deren Derivaten der Formel (II) 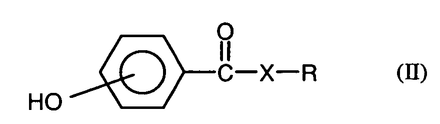 worin
- X: Sauerstoff, NH oder NR bedeutet,
- R: Wasserstoff, einen C₁- bis C₈-Alkyl-oder Cycloalkylrest bedeutet
erhalten werden.

Besonders bevorzugt sind Methyl-, Ethyl- und Propylester der o- und/oder p-Hydroxybenzoesäure.

Ein weiterer Gegenstand der Erfindung ist die Verwendung der erfindungsgemäßen Zubereitungen blockierter Polyisocyanate zur Herstellung von Lacken, Farben und anderen Beschichtungsmaterialien, Klebstoffen und Elastomeren und die Beschichtung von Substraten mit diesen Zubereitungen.

Als Beispiele für die erfindungsgemäßen Hydroxybenzoesäuren oder deren Derivate seien genannt: o-, m- und p-Hydroxybenzoesäure und deren Methyl-, Ethyl-, (Iso)propyl-, Butyl-, 2-Ethylhexyl-, tert-Butyl-Neopentylester, Amide wie Methyl- und Ethylamid, Dimethyl- und Diethylamid.

Als Polyisocyanate zur Herstellung der in den erfindungsgemäßen Zubereitungen enthaltenen blockierten Polyisocyanate eignen sich alle an sich bekannten hydrophilierten, aliphatischen, cycloaliphatischen und aromatischen Polyisocyanate mit einem Isocyanatgehalt von 0,5 bis 50, bevorzugt 3 bis 30, besonders bevorzugt 5 bis 25 Gew.-%. wie Tetramethylen-diisocyanat, Cyclohexan-1,3-und 1,4-diisocyanat, Hexamethylendiisocyanat (HDI), 1-Isocyanato-3,3,5-trimethyl-5-isocyanato-methyl-cyclohexan (Isophorondiisocyanat, IPDI), Methylen-bis-(4-isocyanatocyclohecan), Tetramethylxylylendiisocyanat (TMXDI), Triisocyanatononan.

Geeignet sind auch aromatische Polyisocyanate wie Toluylendiisocyanat (TDI), Diphenylmethan-2,4'-und/oder 4,4'-diisocyanat (MDI), Triphenylmethan-4,4'-diisocyanat, Naphtylen-1,5-diisocyanat.

Bevorzugt geeignet sind Polyisocyanate, die Heteroatome in dem die Isocyanatgruppen enthaltenden Rest enthalten. Beispiele hierfür sind Carbodiimidgruppen, Allophanatgruppen, Isocyanuratgruppen, Urethangruppen und Biuretgruppen aufweisende Polyisocyanate.

Besonders bevorzugt für die Erfindung geeignet sind die bekannten Polyisocyanate, die hauptsächlich bei der Herstellung von Lacken eingesetzt werden, z.B. Biuret-, Isocyanurat- oder Uretdiongruppen aufweisende Modifizierungsprodukte der obengenannten einfachen Polyisocyanate, insbesondere des Hexamethylendiisocyanats oder des Isophorondiisocyanats.

Weiterhin geeignet sind niedermolekulare, Urethangruppen enthaltende Polyisocyanate, wie sie durch Umsetzung von im Überschuß eingesetztem IPDI oder TDI mit einfachen mehrwertigen Alkoholen des Molekulargewichtsbereiches 62-300, insbesondere mit Trimethylolpropan oder Glycerin, erhalten werden können.

Geeignete Polyisocyanate sind ferner die bekannten, endständige Isocyanatgruppen aufweisende Prepolymere, wie sie insbesondere durch Umsetzung der oben genannten einfachen Polyisocyanate, vor allem Diisocyanate, mit unterschüssigen Mengen an organischen Verbindungen mit mindestens zwei gegenüber Isocyanaten reaktionsfähigen funktionellen Gruppen zugänglich sind. In diesen bekannten Prepolymeren entspricht das Verhältnis von Isocyanatgruppen zu gegenüber NCO reaktiven Wasserstoffatomen 1,05 : 1 bis 10 : 1, vorzugsweise 1,1 : 1 bis 3 : 1, wobei die Wasserstoffatome vorzugsweise aus Hydroxylgruppen stammen. Die Art und Mengenverhältnisse der bei der Herstellung von NCO-Prepolymeren eingesetzten Ausgangsmaterialien werden im übrigen vorzugsweise so gewählt, dass die NCO-Prepolymeren vorzugsweise eine mittlere NCO-Funktionalität von 2 bis 3 und eine Zahlenmittel der Molmasse von 500-10000, vorzugsweise 800-4000 aufweisen.

Weiterhin sind als Polyisocyanate im Sinne der Erfindung solche freie Isocyanatgruppen enthaltenden Polymere auf Polyurethan-, Polyester- und /oder Polyacrylat-Basis sowie gegebenenfalls deren Gemische geeignet, bei denen nur ein Teil der freien Isocyanatgruppen mit den erfindungsgemäßen Blockierungsmitteln umgesetzt wird, während der restliche Teil mit einem Überschuss an Hydroxylgruppen enthaltenden Polyestern, Polyurethanen und/oder Polyacrylaten sowie gegebenenfalls deren Gemische umgesetzt wird, so dass ein freie Hydroxygruppen enthaltendes Polymer entsteht, das beim Erhitzen auf geeignete Einbrenntemperaturen ohne Zugabe weiterer mit Isocyanatgruppen reaktionsfähigen Gruppen vernetzt (selbstvernetzende Einkomponenten-Einbrennsysteme).

Selbstverständlich können alle genannten Polyisocyanate auch als Gemische untereinander oder auch mit anderen Vernetzern wie mit Melaminharzen zur Herstellung von Lacken, Farben und anderen Formulierungen eingesetzt werden.

Die Herstellung der erfindungsgemäßen blockierten Polyisocyanate kann nach an sich bekannten Methoden erfolgen. Beispielsweise können ein oder mehrere Polyisocyanate vorgelegt und das Blockierungsmittel (beispielsweise während etwa 10 Min.) unter Rühren zudosiert werden. Es wird so lange gerührt, bis kein freies Isocyanat mehr nachweisbar ist. Es ist auch möglich, ein oder mehrere Polyisocyanate mit einem Gemisch aus zwei oder mehreren (gegebenenfalls auch nicht erfindungsgemäßen) Blockierungsmitteln zu blockieren. Selbstverständlich ist auch eine Herstellung in gegebenenfalls wassermischbaren Lösungsmitteln möglich. Es ist aber auch möglich, die erfindungsgemäßen Polyisocyanate in mit Wasser nicht mischbaren Lösungsmitteln herzustellen, und diese Gemische anschließend in Wasser zu dispergieren bzw. sie mit wassermischbaren Lösungsmitteln wie Aceton oder N-Methylpyrrolidon zu wassermischbaren Lösungen zu verdünnen. Bei der Herstellung der erfindungsgemäßen Polyisocyanate können auch Katalysatoren, Colöser und andere Hilfsmittel und Additive verwendet werden.

Ein wesentlicher Bestandteil der Herstellung der erfindungsgemäßen blockierten Polyisocyanate ist deren Hydrophilierung, die dazu führt, dass die so hergestellten Polyisocyanate nach Zugabe von Wasser in Lösung bleiben oder aber feinteilige, sedimentationsstabile Dispersionen bilden.

Als Hydrophilierungsmittel können dabei alle für diesen Zweck geeigneten kationischen, anionischen und/oder nichtionischen Verbindungen eingesetzt werden wie Mono- und/oder Dihydroxycarbonsäuren oder monofunktionelle Alkylethoxilate. Selbstverständlich können auch Gemische verschiedener Hydrophilierungsmittel eingesetzt werden.

Der Einbau der Hydrophilierungsmittel in die erfindungsgemäßen Polyisocyanate kann nach an sich bekanntem Verfahren erfolgen. So kann z.B. zuerst ein Teil der Isocyanatgruppen mit den erfindungsgemäßen Blockierungsmitteln und anschließend der Rest mit dem Hydrophilierungsmittel umgesetzt werden. Es kann aber auch umgekehrt verfahren werden oder aber so, dass die Blockierung der Isocyanatgruppen in zwei Schritten, nämlich vor und nach der Hydrophilierung erfolgt.

Selbstverständlich können die Hydrophilierungsmittel auch zu einem anderen Zeitpunkt der Herstellung der erfindungsgemäßen Polyisocyanate zugegeben werden wie z.B. bei der Herstellung der Prepolymere. Als Hydrophilierungsmittel können außerdem auch hydrophilierte Polyether, Polyester und/oder Polyacrylate eingesetzt werden, so wie sie z.B. bei der Herstellung von selbstvernetzenden Einkomponenten-Einbrennlacken verwendet werden.

Werden zur Hydrophilierung Mono- oder Dihydroxycarbonsäuren eingesetzt, so erfolgt anschließend eine volle oder teilweise Neutralisation der Carboxylgruppen. Die Neutralisation kann mit beliebigen Aminen erfolgen wie Triethyl-, Dimethylcyclohexyl-, Methyldiisopropyl- oder Dimethylethanolamin. Auch Ammoniak ist geeignet.

Die erfindungsgemäßen blockierten Polyisocyanate werden als hydrophilierte wässrige und/oder wasserverdünnbare blockierten Polyisocyanate haben als Vernetzer beispielsweise nachfolgende Zusammensetzung:
a) 100 Äquivalent-% Polyisocyanat
b) 40-90, bevorzugt 60-85 Äquivalent-% Hydroxybenzoesäure-Derivate der Formel (II)
c) 10-40, bevorzugt 10-25 Äquivalent-% eines Hydrophilierungsmittels und gegebenenfalls
d) 0-40, bevorzugt 5-25 Äquivalent-% einer bevorzugt difunktionellen Hydroxyl- und/oder Aminogruppen enthaltenden Verbindung, mittleren Molgewichts von 62 bis 3000, bevorzugt 62 bis 1500, wobei die Mengenverhältnisse der Reaktionspartner so gewählt werden, dass das Äquivalentverhältnis von NCO-Gruppen der Komponente a) zu gegenüber Isocyanaten reaktionsfähigen Gruppen der Komponenten b), c) und d) bei 1:0,8 bis 1:1,2 liegt, sowie gegebenenfalls Zuschlagstoffe und Hilfsstoffe.

Als difunktionelle Kettenverlängerungskomponente c) kommen beispielsweise Diamine, Diole und auch Hydroxyamine im Molekulargewichtsbereich von 32 bis 300 in Betracht. Beispiele sind Hydrazin, Ethylendiamin, Isophorondiamin, das Bisketimin aus Isophorondiamin und Methylisobutylketon, 1,4-Dihydroxy-butan, Ethanolamin, N-Methylethanolamin, Hydroxyethylethylendiamin, das Addukt von 2 Mol Propylencarbonat und 1mol Hydrazin der Formel (III) in Frage.

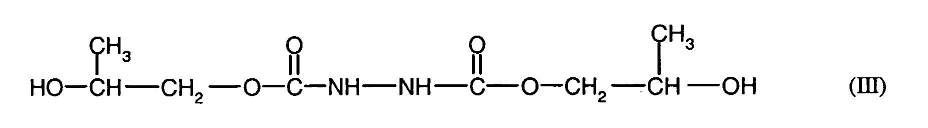

Die wässrigen und/oder wasserverdünnbaren blockierten Polyisocyanate liegen entweder als Lösungen in vorzugsweise wassermischbaren Lösungsmitteln wie N-Methylpyrrolidon mit einer Konzentration von 40-95, vorzugsweise 60-85 Gew.-% vor oder aber als feinteilige Dispersionen mit einem Feststoffgehalt von 25-70, vorzugsweise 35-50 Gew.-%.

Die erfindungsgemäßen Polyisocyanate sind, wie oben beschrieben, entweder selbst-vernetzende Polymere oder aber Vernetzer für beliebige Polyolkomponenten. Als Polyolkomponenten, die auch als Gemische eingesetzt werden können, kommen in Betracht:

Polyhydroxypolyester, Polyhydroxypolyether oder Hydroxylgruppen aufweisende Poly-merisate und -Carbonate, z.B. die an sich bekannten Polyhydroxypolyacrylate. Die Verbindungen weisen im allgemeinen eine Hydroxylzahl von 20 bis 200, vorzugsweise von 50 bis 130, bezogen auf 100 %ige Produkte, auf.

Bei den Polyhydroxylpolyacrylaten handelt es sich um an sich bekannte Mischpolymerisate und - carbonate von Styrol mit einfachen Estern der Acrylsäure und/oder Methacrylsäure, wobei zwecks Einführung der Hydroxylgruppen Hydroxyalkylester, wie beispielsweise die 2-Hydroxyethyl-, 2-Hydroxypropyl-, 2-,3- oder 4-Hydroxybutylester dieser Säuren mitverwendet werden.

Als Polyesterpolyole kommen insbesondere lineare Polyesterdiole oder auch schwach verzweigte Polyesterpolyole in Betracht, wie sie in bekannter Weise aus aliphatischen, cyclo-aliphatischen oder aromatischen Di- oder Polycarbonsäuren bzw. ihren Anhydriden, wie z.B. Bernstein-, Glutar-, Adipin-, Pimelin-, Kork-, Azelain-, Sebacin-, Nonandicarbon-, Decan-dicarbon-, Terephthal-, Tetrahydrophthal-, Isophthal-, o-Phthal-, Hexahydrophthal- oder Trimellitsäure sowie Säureanhydride, wie o-Phthal-, Trimellit- oder Bernsteinsäureanhydrid oder deren Gemisch mit mehrwertigen Alkoholen, wie z.B. Ethandiol, Di, Tri-, Tetraethylenglykol, 1,2-Propandiol, Di-, Tri-, Tetrapropylenglykol, 1,3-Propandiol, Butandiol-1,4, Butandiol-1,3, Butandiol-2,3, Pentandiol-1,5, Hexandiol-1,6, 2,2-Dimethyl-1,3-propandiol, 1,4-Dihydroxy-cyclohexan, 1,4-Dimethylolcyclohexan, Octandiol-1,8, Decandiol-1,10, Dodecandiol-1,12 oder deren Gemische, gegebenenfalls unter Mitverwendung höherfunktioneller Polyole, wie Trimethylolpropan oder Glycerin, hergestellt werden können.

Als mehrwertige Alkohole zur Herstellung der Polyesterpolyole kommen natürlich auch cycloaliphatische und/oder aromatische Di- und Polyhydroxylverbindungen in Frage. Anstelle der freien Polycarbonsäure können auch die entsprechenden Polycarbonsäureanhydride oder entsprechende Polycarbon-säureester von niedrigen Alkoholen oder deren Gemische zur Herstellung der Polyester verwendet werden.

Selbstverständlich kann es sich bei den Polyesterpolyolen auch um Homo- oder Mischpolymerisate von Lactonen handeln, die vorzugsweise durch Anlagerung von Lactonen oder Lactongemischen, wie Butyrolacton, ε-Caprolacton und/oder Methyl-ε-caprolacton an geeignete di- und/oder höherfunktionelle Startermoleküle, wie z.B. die vorstehend als Auf-baukomponenten für Polyesterpolyole genannten niedermolekularen, mehrwertigen Alkohole, erhalten werden.

Auch Hydroxylgruppen aufweisenden Polycarbonate kommen als Polyhydroxylkomponenten in Betracht, z.B. solche, die durch Umsetzung von Diolen wie 1,4-Butandiol und/oder 1,6-Hexandiol mit Diarylcarbonaten, z.B. Diphenylcarbonat, Dialkylcarbonat, wie Dimethyl-carbonat oder Phosgen hergestellt werden können, bevorzugt mit einem Molekulargewicht von 800 bis 5 000.

Als Polyetherpolyole geeignet sind z.B. die Polyadditionsprodukte der Styroloxide, des Ethylenoxid, Propylenoxid, Tetrahydrofuran, Butylenoxid, sowie ihre Mischadditons- und Pfropfprodukte, sowie die durch Kondensation von mehrwertigen Alkoholen oder Mischungen derselben und die durch Alkoxylierung von mehrwertigen Alkoholen, Aminen und Aminoalkoholen gewonnenen Polyetherpolyole.

Besonders bevorzugte Aufbaukomponenten sind die Homo-, Misch- und Pfropfpolymerisate des Propylenoxides und des Ethylenoxids, welche durch Anlagerung der genannte Epoxide an niedermolekulare Di- oder Triole, wie sie oben als Aufbaukomponenten für Polyesterpolyole genannt wurden, oder an Wasser zugänglich sind.

Weiter besonders bevorzugte Aufbaukomponenten sind Polyesterdiole auf Basis von Adipinsäure und Glykolen wie 1,4-Butandiol, 1,6-Hexandiol und/oder 2,2-Dimethyl-1,3-propandiol (Neopentylglykol). Ebenfalls besonders bevorzugt sind Mischpolymerisate des 1,6-Hexandiols mit ε-Caprolacton und Diphenylcarbonat mit einem Molekulargewicht von 1 000 bis 4 000, sowie 1,6-Hexandiol-polycarbonatdiole mit einem Molekulargewicht von 1 000 bis 3 000.

Die Herstellung der Polyesterpolyole erfolgt nach bekannten Methoden, wie z.B. in Houben-Weyl, Methoden der organischen Chemie, Band XIV/2, G. Thieme-Verlag, 1963, Seiten 1 bis 47 beschrieben sind. Die gegebenenfalls erforderliche hydrophile Modifizierung dieser Polyhydroxylverbindungen erfolgt nach an sich bekannten Methoden, wie sie beispielsweise in EP-A-0 157 291 oder EP-A-0 427 028 offenbart sind.

Gegebenenfalls mitzuverwendende Aufbaukomponenten sind Di- und Polyole des Molekulargewichtsbereichs 62 bis 299. Es kommen als solche beispielsweise die zur Herstellung der Polyesterpolyole genannten mehrwertigen, insbesondere zweiwertigen Alkohole sowie weiterhin niedermolekulare Polyesterdiole, wie z.B. Adipinsäure-bis-(hydroxyethyl)-ester oder kurzkettige auf aromatischen Diolen gestartete Homo- und Mischadditionsprodukte des Ethylenoxid oder des Propylenoxid in Frage. Bevorzugte, gegebenenfalls mitzuverwendende Aufbaukomponenten sind 1,2-Ethandiol, 1,4-Butandiol, 1,6-Hexandiol und 2,2-Dimethyl-propandiol-1,3. Besonders bevorzugt sind 1,4-Butandiol und 1,6-Hexandiol.

Weitere geeignete Aufbaukomponenten ii) sind Triole wie Glyzerin, Trimethylolpropan, Trimethylolethan und deren Alkoxylierungsprodukte.

Selbstverständlich können auch Gemische oder aber Reaktionsprodukte auf der Basis von Polyestern, Polyethern und Polyacrylaten, gegebenenfalls auch modifiziert durch Polyurethane der bekannten Art, eingesetzt werden.

Die erfindungsgemäßen blockierten Polyisocyanate werden zur Herstellung von Einbrennlacken, zur Beschichtung von Substraten, vorzugsweise aus Metallen, mineralischen Stoffen, Holz, Kunststoffen, z.B. für die Industrielackierung, bei der Textilbeschichtung und bei der Automobilerstlackierung verwendet. Hierzu können die erfindungsgemäßen Überzugsmittel durch Rakeln, Tauchen, Spritzauftrag wie Druckluft- oder Airless-Spritzen, sowie durch elektrostatischen Auftrag, beispielsweise Hochrotationsglockenauftrag, aufgetragen werden. Die Trockenfilm-Schichtdicke kann beispielsweise bei 10-120 µm liegen. Das Aushärten der getrockneten Filme erfolgt durch Einbrennen im Temperaturbereich von 90-160°C, bevorzugt 110-140°C, besonders bevorzugt 120-130°C.

Die Herstellung der Lacke, Farben und anderen Formulierungen aus den erfindungsgemäßen Polyisocyanaten erfolgt nach an sich bekannten Methoden. Außer den Polyisocyanaten und Polyolen können den Formulierungen übliche Additive und andere Hilfsstoffe (z.B. Pigmente, Füllstoffe, Verlaufsmittel, Entschäumer, Katalysatoren) in durch den Fachmann leicht zu ermittelnden Mengen zugesetzt werden.

Die nachfolgenden Beispiele erläutern näher die Erfindung, ohne sie jedoch einzuschränken.

### Beispiele

Partikelgrößen wurden durch Laser-Korrelations-Spektroskopie (LKS) bestimmt.

### Beispiel 1

### (Herstellung einer erfindungsgemäßen wässrigen Dispersion)

Zu 343,20 g (1,76 Val) eines handelsüblichen isocyanurathaltigen Lackpolyisocyanates auf Basis von 1,6-Diisocyanatohexan (HDI) mit einem NCO-Gehalt von 21,4 Gew.-%, einer Viskosität bei 23°C von 3000 mPas und einer Funktionalität von 3,5 wurden unter Rühren bei Raumtemperatur 9,45 g (0,08 Mol) 1,6-Hexandiol zugegeben. Nach Aufheizen auf 70°C wurde 2 Stunden gerührt bis ein NCO-Wert von 19,05 % (theoret. 19,06 %) erreicht wurde. Danach wurden 16 g Pluriol® (0,032 Mol)(BASF AG, Ludwigshafen), 154,22 g (0,928 Mol) 4-Hydroxybenzoesäureethylester und 2,61 g Dabco (Air Products) zugegeben und 2 Stunden weitergerührt, bis ein NCO-Wert von 4,0 % erreicht wurde. Dann wurden 47,20 g (0,940 Mol) Hydroxypivalinsäure, gelöst in 10,36 g N-Methylpyrrolidon, zugegeben. Es wurde weiter bei 70°C gerührt, bis IR-spektroskopisch keine NCO-Gruppen mehr nachweisbar waren (4 Stunden). Dann wurden bei 70°C 39,22 g (0,44 Mol) Dimethylethanolamin zugegeben und 15 Minuten nachgerührt. Anschließend wurden 1351 g 70°C warmes entionisiertes Wasser zugegeben und 1 h bei 70°C dispergiert. Nach Abkühlen auf Raumtemperatur entstand eine stabile weiße Dispersion mit nachfolgenden Eigenschaften:

| | |
|---|---|
| Festkörpergehalt | 30% |
| pH-Wert | 8,02 |
| Viskosität (23°C) | 2000 mPas |
| Mittlere Partikelgröße (LKS) | 57 nm |

### Beispiel 2

### (Herstellung eines erfindungsgemäßen Polyisocyanat-Vernetzers)

343,20 g (1,76 Val) eines handelsüblichen isocyanurathaltigen Lackpolyisocyanates auf Basis von 1,6-Diisocyanatohexan (HDI) mit einem NCO-Gehalt von 21,4 Gew.-%, einer Viskosität bei 23°C von 3000 mPas und einer Funktionalität von 3,5 wurden auf 70°C unter Rühren aufgeheizt und 9,45 g (0,08 Mol) 1,6-Hexandiol innerhalb von 10 Minuten zugegeben. Nach Zugabe einer Lösung aus 37,76 g (0,32 Val) Hydroxypivalinsäure in 60,93 g N-Methylpyrrolidon (innerhalb von 10 Minuten) wurde 4 Stunden bei 70°C gerührt. Der NCO-Gehalt des Reaktionsgemisches betrug dann 11,02 %. Anschließend wurden bei 70°C 196,80 g (1,184 Mol) 4-Hydroxybenzoesäureethylester und 5,33 g Dabco (Air Products) zugegeben und 2 Stunden nachgerührt. IR-spektroskopisch konnte dann kein NCO mehr gefunden werden. Innerhalb von 10 Minuten wurden bei 70°C 31,38 g (0,352 Mol) Dimethylethanolamin zugegeben, 10 Minuten nachgerührt und anschließend unter Rühren 1351 g 70°C warmes entionisiertes Wasser zugegeben und 1 Stunde bei 70°C nachgerührt. Nach Abkühlen unter Rühren auf Raumtemperatur wurde eine Dispersion mit folgenden Eigenschaften erhalten:

| | |
|---|---|
| Festkörpergehalt | 30% |
| pH-Wert | 8,31 |
| Viskosität | 2300 mPas |
| Partikelgröße (LKS) | 62 nm |

### Beispiel 3

### (Herstellung eines wasserverdünnbaren Polyisocyanat-Vernetzers)

58,80 g (0,297 Val) eines handelsüblichen isocyanurathaltigen Lackpolyisocyanates auf Basis von 1,6-Diisocyanatohexan (HDI) mit einem NCO-Gehalt von 21,4 Gew.-%, einer Viskosität bei 23°C von 3000 mPas und einer Funktionalität von 3,5, 7,08 g (0,06 Mol) Hydroxypivalinsäure und 56,57 g N-Methylpyrrolidon wurden unter Rühren vermischt und innerhalb von 30 Minuten auf 70°C erwärmt. Bei dieser Temperatur wurde 2 Stunden gerührt und die Temperatur anschließend auf 80°C erhöht. Nach weiteren 2 Stunden wurde ein NCO-Gehalt von 7,60 % erreicht, das Reaktionsgemisch auf 70°C abgekühlt und dann innerhalb von 15 Minuten 36,89 g (0,222 Mol) 4-Hydroxybenzoesäureethylester und 1,0 g Dabco (Air Products) zugegeben und 2 Stunden weitergerührt. Die Vollständigkeit der Reaktion wurde durch IR-Spektrum nachgewiesen. Anschließend wurden bei 60°C 5,35 g (0,06 Mol) Dimethylethanolamin zugegeben und 10 Minuten nachgerührt. Es entstand eine klare Lösung des blockierten Polyisocyanats mit einem Feststoffgehalt von 68 % und mit einem Gehalt an blockierten NCO-Gruppen von 5,69 %.

### Beispiel 4

### (Vergleichsbeispiel I)

Es wurde gearbeitet wie in Beispiel 1 beschrieben, jedoch wurde anstelle von 4-Hydroxybenzoesäureethylester/Dabco Butanonoxim eingesetzt. Die erhaltene Dispersion besaß nachfolgende Eigenschaften:

| | |
|---|---|
| Festkörpergehalt | 38 % |
| pH-Wert | 8,5 |
| Viskosität (23°C) | 4000 mPas |
| Partikelgröße (LKS) | 42 nm |

### Beispiel 5

### (Herstellung eines selbstvernetzenden Einkomponenten-Einbrennsystems)

Zu einem Gemisch aus 337,5 g (3,035 Val) Isophorondiisocyanat, 18,02 g (0,2 Mol) 1,4-Butandiol, 13,42 g (0,1 Mol) Trimethylolpropan, 22,5 g (0,045 Mol) Methanolethoxylats mittleren Molgewichts von 500 und 205,80 g (0,49 Val) eines Polyesters aus Adipinsäure und Hexandiol mittleren Molgewichts von 840 wurden bei 85°C 53,66 g (0,4 Mol) Dimethylolpropionsäure, gelöst in 106,80 g N-Methylpyrrolidon, unter Rühren zugegeben und das Reaktionsgemisch 4 Stunden bei dieser Temperatur gerührt. Der NCO-Gehalt betrug dann 4,78 % (theoret. 4,80 %). Innerhalb von 20 Minuten wurden 101,37 g (0,61 Val) 4-Hydroxybenzoesäureethylester und 3,76 g Dabco (Firma Air Products) zugegeben. Das Reaktionsgemisch wurde 110 Minuten bei 100°C gerührt, bis ein NCO-Gehalt von 1,85% (theoret. 1,90 %) erreicht wurde. Anschließend wurden 318,8 g (1 Val) eines Polyesters aus Adipinsäure, Isophthalsäure, Trimethylolpropan, Neopentylglykol und Propylenglykol zugegeben und das Reaktionsgemisch 10 Stunden bei 85°C gerührt. Danach konnten IR-spektroskopisch keine NCO-Gruppen mehr nachgewiesen werden. Anschließend wurden 35,57g (0,4 Mol) Dimethylethanolamin zugegeben und 10 Minuten nachgerührt. Nach Zugabe von 2015 g 70°C warmem entionisiertem Wasser wurde 1h bei 70°C dispergiert. Die erhaltene weiße Dispersion besaß nachfolgende Eigenschaften:

| | |
|---|---|
| Festkörpergehalt | 35% |
| pH-Wert | 8,5 |
| Viskosität (23°C) | 70 mPas |
| Partikelgröße (LKS) | 32 nm |

### Beispiel 6

### (Vergleichsbeispiel II)

Es wurde wie im Beispiel 4 beschrieben gearbeitet, jedoch wurde anstelle des erfindungsgemäßen Blockierungsmittels Butanonoxim eingesetzt. Die erhaltene Dispersion hatte nachfolgende Eigenschaften:

| | |
|---|---|
| Festkörpergehalt | 40% |
| pH-Wert | 8,6 |
| Viskosität (23°C) | 3800 mPas |
| Partikelgröße (LKS) | 51 nm |

### Anwendungsbeispiele

Die nachfolgenden Beispiele zeigen die Vorteile der erfindungsgemäßen blockierten Polyisocyanate gegenüber dem Stand der Technik: Obwohl in bezug auf die Filmeigenschaften gleiche Eigenschaften erreicht wurden, werden bei den erfindungsgemäßen Lacksystemen umweltverträglichere Produkte freigesetzt.

Es wurden Klarlacke nachfolgender Zusammensetzung hergestellt. Aus den Klarlacken wurden Filme hergestellt, 10 Minuten bei Raumtemperatur getrocknet und anschließend 30 Minuten bei 130°C eingebrannt. Die erhaltenen Filme wurden anwendungstechnisch beurteilt. Die Ergebnisse sind in Tabelle 1 zusammengestellt.

**Tabelle 1**

| **(NCO : OH=1,0)** | | | | | | |
|---|---|---|---|---|---|---|
| **Polyisocyanat aus Beispiel-Nr.** | **1** | **2** | **3** | **4** | **5** | **6** |
| **Produkt (g)** | | | | | | |
| Bayhydrol® PT 241¹⁾ | 20,1 | 20,1 | 20,1 | 20,1 | - | - |
| Bayhydrol® VP LS 2290 | 54,9 | 54,9 | 54,9 | 54,9 | - | - |
| Additol® XW 395 Lff | 1,2 | 1,3 | 1,2 | 1,2 | 1 | 1 |
| Surynol® 104, 50%ig in NMP | 1,2 | 1,3 | 1,2 | 1,2 | 1 | 1 |
| Dest. Wasser | | | 66,0 | 17,0 | - | - |
| Polyisocyanat | 168,0 | 168,0 | - | - | 150,0 | 150,0 |

| **Eigenschaften** | | | | | | |
|---|---|---|---|---|---|---|
| Pendelhärte (s) | 115 | 121 | 120 | 117 | 108 | 109 |
| Anlösbarkeit (IMin.) | 3344 | 3244 | 3244 | 3344 | 3444 | 4444 |
| Impact-Test | 20/40 | 40/40 | 20/40 | <20/40 | - | - |
| Gitterschnitt | 0 | 0 | 0 | 0 | 0 | 0 |

| | | | | | | |
|---|---|---|---|---|---|---|
| ¹⁾Bayer AG, Leverkusen Lff: Lieferform | | | | | | |

## Patentansprüche

1. Wässrige Zubereitungen blockierter Polyisocyanate der allgemeinen Formel (I) 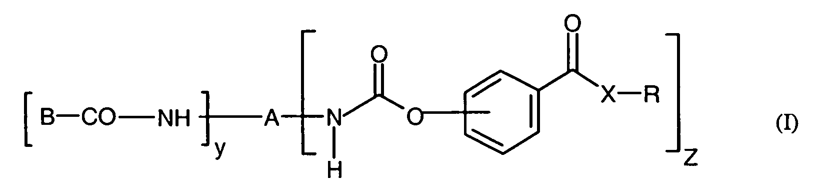 in welcher
A den Rest eines Polyisocyanats bedeutet
B den Rest eines kationischen, anionischen und/oder nichtionischen Hydrophilierungsmittels bedeutet,
X Sauerstoff, NH oder NR bedeutet,
R Wasserstoff, C₁- bis C₈-Alkyl oder Cycloalkyl bedeutet
Z für die Zahl 1 bis 8 steht und
y eine Zahl von 0,1 bis 4,0 bedeutet, wobei das Äquivalent-Verhältnis von z zu y 20:1 bis 1:1 beträgt.

2. Zubereitungen gemäß Anspruch 1, **dadurch gekennzeichnet, dass** mit 2- und/oder 4-Hydroxybenzoesäureester blockierte Polyisocyanate enthalten sind.

3. Zubereitungen gemäß Ansprüchen 1 und 2, **dadurch gekennzeichnet, dass** mit 4-Hydroxybenzoesäureethyl-, -propyl- und/oder -methylester blockierte Polyisocyanate enthalten sind.

4. Zubereitungen gemäß Ansprüchen 1 bis 3, **dadurch gekennzeichnet**, enthaltend blockierte Isocyanate, zu deren Herstellung
a) 100 % Äquivalent - % Polyisocyanat
b) 40-90 Äquivalent-% Hydroxybenzoesäure(derivat)
c) 10-40 Äquivalent-% eines Hydrophilierungsmittels und gegebenenfalls
d) 0-40 Äquivalent-% einer bevorzugt difunktionellen Hydroxyl- und/oder Aminogruppen enthaltenden Verbindung mit einem mittleren Molgewicht von 62
bis 3000 eingesetzt werden, wobei die Mengenverhältnisse der Reaktionspartner so gewählt werden, dass das Äquivalentverhältnis der NCO-Gruppen der Komponente a) zu gegenüber Isocyanaten reaktionsfähigen Gruppen der Komponente b), c) und d) bei 1:0,8 bis 1:1,2 liegt,
sowie gegebenenfalls Zuschlagstoffe und Hilfsstoffe.

5. Verfahren zur Herstellung der Zubereitungen gemäß Ansprüchen 1 bis 4, **daduch gekennzeichnet, dass** Polyisocyanate mit Hydroxycarbonsäuren oder deren Derivaten der Formel II 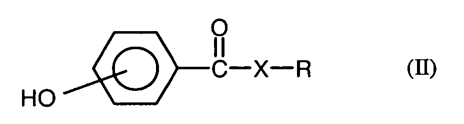 worin
X Sauerstoff, NH oder NR bedeutet,
R Wasserstoff oder einen C₁ bis C₈ Alkyl-oder Cycloalkylrest bedeutet,
gegebenenfalls in Gegenwart von Katalysatoren, Colösern und anderen Hilfsmitteln und Additiven, gegebenenfalls in wassermischbaren oder in nicht mit Wasser mischbaren Lösungsmitteln umgesetzt werden und die daraufhin erhaltenen Gemische anschließend in Wasser gelöst oder dispergiert werden oder sie mit wassermischbaren Lösungsmitteln zu wassermischbaren Lösungen verdünnt werden.

6. Verwendung der Zubereitungen gemäß Ansprüchen 1 bis 4 zur Herstellung von Lacken, Farben und anderen Beschichtungsmaterialien, Klebstoffen oder Elastomeren.

7. Verwendung gemäß Anspruch 6, **dadurch gekennzeichnet, dass** es sich um Einbrennsysteme handelt.

8. Verwendung gemäß Anspruch 6, **dadurch gekennzeichnet, dass** es sich um selbst-vernetzende Systeme handelt.

9. Verwendung gemäß Ansprüchen 6 bis 7 in Einbrennsystemen zur Beschichtung von Substanzen aus Holz, Metallen, Textilien, mineralischen Stoffen und Kunststoffen und Verbundmaterialien.

10. Verfahren zur Beschichtung von Substraten, **dadurch gekennzeichnet, dass** Beschichtungsformulierungen gemäß Anspruch 1 auf ein Substrat aufgebracht werden und anschließend das so behandelte Substrat auf eine Temperatur erwärmt wird, bei der der p-Hydroxybenzoesäureester abgespalten wird und die dadurch freigesetzten Isocyanatgruppen mit dem Vemetzer unter Bildung eines vernetzten Polyurethans abreagieren.
